# EUROPEAN PATENT APPLICATION

(11) **EP 3 855 047 A1**
(43) Date of publication of application: **28.07.2021**
(21) Application number: 19895970.2
(22) Date of filing: 06.12.2019
(51) Int. Cl.: F16H 48/00, B01D 50/00

(54) **DIFFERENTIAL APPARATUS, AIR PURIFYING APPARATUS AND AIR PURIFIER**

(30) Priority: 14.12.2018 CN 201811536587
(71) Applicant: Guangdong Midea White Home Appliance Technology Innovation Center Co., Ltd., Beijiao, Shunde Foshan, Guangdong 528311 (CN); Midea Group Co., Ltd., Foshan, Guangdong 528311 (CN)
(72) Inventor: PU, Zulin, Foshan, Guangdong 528311 (CN); HAN, Yunqing, Foshan, Guangdong 528311 (CN); ZHENG, Fangzhen, Foshan, Guangdong 528311 (CN); ZHANG, Hui, Foshan, Guangdong 528311 (CN)
(74) Representative: Lam, Alvin
(86) International application number: PCT/CN2019/123716
(87) International publication number: WO 2020/119602

(57) **Abstract**

A differential apparatus (100), an air purifying apparatus (1000) and an air purifier, wherein the differential apparatus (100) comprises: a motor (10), the motor (10) being provided with a motor shaft (11); an inner output shaft (20), the inner output shaft (20) being connected to the motor shaft (11) of the motor (10) and coaxially rotating at the same speed as the motor shaft; an exterior output shaft (30), the exterior output shaft (30) being connected to the inner output shaft (20) by means of a transmission member such that the rotational speed of the inner output shaft (20) is different from the rotational speed of the exterior output shaft (30), wherein the exterior output shaft (30) is provided with a central hole and the exterior output shaft (30) is sleeved on the inner output shaft (20).

## Description

### CROSS-REFERENCE TO RELATED APPLICATION

This application is based on and claims priority to Chinese Patent Application Serial No. 201811536587.2, filed on December 14, 2018, the entire content of which is incorporated herein by reference.

### FIELD

The present disclosure relates to the field of purification equipment, and more particularly to a differential apparatus, an air purifying apparatus, and an air purifier.

### BACKGROUND

Purification equipment in the related art purifies air by using filters alone, such as filter screens. In such a way, the purification efficiency is low and will be seriously diminished after a period of use, and the filter screens need to be replaced frequently, that is, the frequency of regular replacement of the filter screens is high, which is inconvenient to use and causes high costs of replacement and maintenance.

### SUMMARY

The present disclosure aims to solve at least one of the problems in the related art.

To this end, the present disclosure provides a differential apparatus that can realize differential transmission.

The present disclosure further provides an air purifying apparatus having the above differential apparatus. The air purifying apparatus is convenient to use and has low cost.

The present disclosure further provides an air purifier having the above air purifying apparatus. The air purifying apparatus is convenient to use and has low cost.

The differential apparatus according to embodiments of a first aspect of the present disclosure includes: a motor having a motor shaft; an internal output shaft connected to the motor shaft of the motor, the internal output shaft and the motor shaft rotating coaxially at a same speed; and an external output shaft connected to the internal output shaft through a transmission member to allow a rotation speed of the internal output shaft to be different from a rotation speed of the external output shaft, wherein the external output shaft has a central hole and is fitted over the internal output shaft.

With the differential apparatus according to the embodiments of the present disclosure, by connecting the external output shaft to the internal output shaft through the transmission member, the rotation speeds of the external output shaft and the internal output shaft are different, so that the differential rotation of the external output shaft and the internal output shaft can be realized, to drive the corresponding rotating components to rotate at different speeds, to improve the performance of the whole machine (e.g., the air purifying apparatus) and reduce the energy consumption.

According to an embodiment of the present disclosure, the transmission member includes a gear set. The gear set includes: a first gear fitted over the internal output shaft and configured to rotate synchronously with the internal output shaft; a second gear configured to mesh with the first gear for transmission; and a third gear arranged coaxially with the second gear and configured to rotate synchronously with the second gear, wherein the external output shaft is provided with a gear portion, and the third gear meshes with the gear portion on the external output shaft for transmission.

According to an optional example of the present disclosure, the differential apparatus includes a box body defining an accommodating cavity, wherein the transmission member is located in the accommodating cavity, and the internal output shaft penetrates the accommodating cavity from top to bottom and extends downward.

According to another optional example of the present disclosure, the differential apparatus includes a bearing assembly arranged on the internal output shaft and the external output shaft, and configured to support rotation of the internal output shaft and the external output shaft.

According to still another optional example of the present disclosure, the bearing assembly includes: a first bearing, wherein a side of the gear portion facing the motor is provided with an accommodating groove, and the first bearing is fitted over the internal output shaft and fitted in the accommodating groove to support the rotation of the internal output shaft; and a second bearing, wherein a mounting groove is arranged in an inner bottom wall of the box body, the second bearing is fitted in the mounting groove, and the second bearing is fitted over the external output shaft to support the rotation of the external output shaft.

According to still another optional example of the present disclosure, the differential apparatus further includes a motor cover defining a motor cavity, wherein the motor is located in the motor cavity, and an end of the first gear away from the gear portion extends into the motor cavity in an axial direction.

Further, the first gear includes: a gear body configured to mesh with the second gear; and a shaft sleeve coaxially connected with the gear body, extending into the motor cavity, and configured to connect with the motor shaft and rotate coaxially with the motor shaft at a same speed.

Optionally, the differential apparatus includes sealing rings connected between the external output shaft and the box body and between the first gear and the box body.

The air purifying apparatus according to embodiments of a second aspect of the present disclosure includes: a housing having an air inlet and an air outlet, and defining a rotating cavity in communication with the air inlet and the air outlet; a rotating disk rotatably arranged in the rotating cavity; a rotating cylinder rotatably arranged in the rotating cavity and located upstream of the rotating disk; a water distributor configured to guide water at a bottom of the rotating cavity to flow upward and distribute the water toward an interior of the rotating cylinder; and the differential apparatus according to the above embodiments, wherein the differential apparatus is arranged downstream of the rotating disk; the internal output shaft of the differential apparatus is connected to one of the rotating disk and the rotating cylinder, and the external output shaft of the differential apparatus is connected to the other of the rotating disk and the rotating cylinder, to control the rotating disk and the rotating cylinder to rotate at different speeds.

For the air purifying apparatus according to the embodiments of the present disclosure, by connecting the external output shaft to the internal output shaft through the transmission member, the rotation speeds of the external output shaft and the internal output shaft are different, so that the differential rotation of the external output shaft and the internal output shaft can be realized, to drive the corresponding rotating components to rotate at different speeds. Thus, the air purifying apparatus can exert the optimal performance, and the purification efficiency of the air purifying apparatus can be improved. The frequency of regular replacement of the filter screen is very low, and there is even no need to replace the filter screen, which can bring about convenience for use, reduce the subsequent maintenance cost, and lower the production cost.

In some optional examples, the air purifying apparatus includes a first connector through which the internal output shaft is connected to the rotating cylinder. The first connector includes: a first connecting block having a first through hole, the internal output shaft passing through the first through hole and extending downward beyond a lower surface of the first connecting block; and a first convex portion arranged on a top of the first connecting block and filled between the internal output shaft and the rotating cylinder in a direction surrounding the internal output shaft.

In some optional examples, the air purifying apparatus includes a second connector through which the external output shaft is connected to the rotating disk. The second connector includes: a second connecting block having a second through hole and provided with a groove at a bottom of the second connecting block, wherein a mating portion is formed at a lower end of the external output shaft, the external output shaft passes through the second through hole, and the mating portion is fitted in the groove; and a second convex portion arranged on a top of the second connecting block, filled between the external output shaft and the rotating disk in a direction surrounding the external output shaft, and extending upward beyond an upper surface of the rotating disk.

Further, the air purifying apparatus includes a third bearing arranged on a side of the second connector away from the motor, and fitted over the internal output shaft to support rotation of the internal output shaft.

The air purifier according to embodiments of a third aspect of the present disclosure includes the air purifying apparatus discussed in the above embodiments.

For the air purifier according to the embodiments of the present disclosure, by connecting the external output shaft to the internal output shaft through the transmission member, the rotation speeds of the external output shaft and the internal output shaft are different, so that the differential rotation of the external output shaft and the internal output shaft can be realized, to drive the corresponding rotating components to rotate at different speeds. Thus, the air purifying apparatus can exert the optimal performance, and the purification efficiency of the air purifier can be improved.

Additional aspects and advantages of embodiments of the present disclosure will be given in part in the following descriptions, become apparent in part from the following descriptions, or be learned from the practice of the embodiments of the present disclosure.

### BRIEF DESCRIPTION OF THE DRAWING

The above and/or additional aspects and advantages of embodiments of the present disclosure will become apparent and more readily appreciated from the following descriptions made with reference to the drawing, in which:

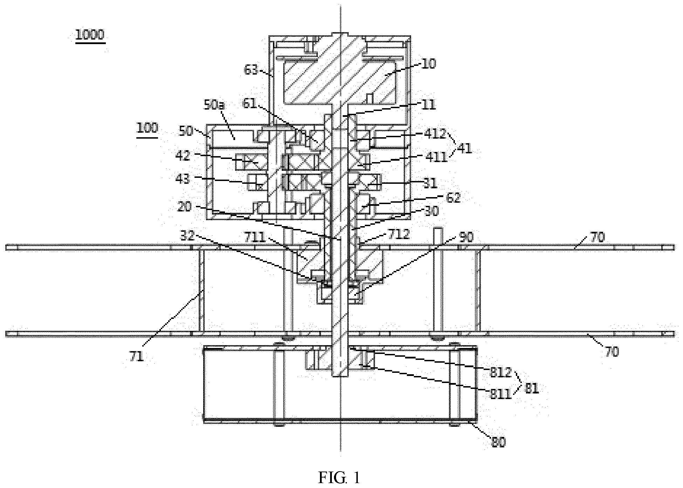

FIG 1 is a schematic view of a differential apparatus according to embodiments of the present disclosure.

### Reference numerals:

1000: air purifying apparatus;
100: differential apparatus;
10: motor; 11: motor shaft;
20: internal output shaft;
30: external output shaft; 31 gear portion 31; 32: mating portion;
41: first gear; 411: gear body; 412: shaft sleeve; 42: second gear; 43: third gear;
50: box body; 50a: accommodating cavity
61: first bearing; 62: second bearing; 63: motor cover;
70: rotating disk; 711: second connecting block; 712: second convex portion; 71: separating cylinder;
80: rotating cylinder; 81: first connector; 811: first connecting block; 812: first convex portion;
90: third bearing.

### DETAILED DESCRIPTION

Embodiments of the present disclosure will be described in detail below, and examples of the embodiments will be illustrated in drawings. The same or similar elements and the elements having same or similar functions are denoted by like reference numerals throughout the descriptions. The embodiments described herein with reference to the drawings are explanatory and are merely used to generally understand the present disclosure. The embodiments shall not be construed to limit the present disclosure.

A differential apparatus 100 according to embodiments of a first aspect of the present disclosure will be described below with reference to FIG 1. The differential apparatus 100 may be applied in an air purifying apparatus 1000.

As shown in FIG. 1, the differential apparatus 100 according to the embodiments of the present disclosure includes a motor 10, an internal output shaft 20, and an external output shaft 30. Specifically, the motor 10 has a motor shaft 11; the internal output shaft 20 is connected to the motor shaft 11 of the motor 10, and the internal output shaft 20 and the motor shaft 11 rotate coaxially at the same speed; the external output shaft 30 is connected to the internal output shaft 20 through a transmission member. In such a way, a rotation speed of the internal output shaft 20 and a rotation speed of the external output shaft 30 are different. Further, the external output shaft 30 has a central hole, and the external output shaft 30 is fitted over the internal output shaft 20.

Thus, the motor shaft 11 and the internal output shaft 20 are configured to rotate coaxially at the same speed, the external output shaft 30 is fitted over the internal output shaft 20, and the external output shaft 30 is connected to the internal output shaft 20 through the transmission member, such that the internal output shaft 20 and the external output shaft 30 can maintain different rotation speeds, and rotation speeds of components separately driven by the internal output shaft 20 and the external output shaft 30 are also different, which can effectively avoid failing to achieve optimal performance due to the same speed of the internal output shaft 20 and the external output shaft 30, and can improve the working efficiency of the whole machine.

It should be noted that the transmission member between the external output shaft 30 and the internal output shaft 20 may be a friction wheel transmission mechanism, a screw transmission mechanism, a gear set, a belt transmission, a chain transmission and the like, which will not be specifically limited in the present disclosure, as long as differential transmission of the external output shaft 30 and the internal output shaft 20 can be achieved.

It can be understood that the application of the differential apparatus 100 to the air purifying apparatus 1000 is taken as an example for description. The air purifying apparatus 1000 includes a rotating cylinder 80 and a rotating disk 70. In the field of purification and separation, when the air purifying apparatus 1000 is working, water droplets are sprayed from small apertures of a water distributor or an atomizing nozzle located in the center and sprayed to the rotating cylinder 80 rotating at a high speed. The water droplets are broken down into a liquid film and mixed with an airflow between the rotating cylinder 80 and an inner wall of a housing, to play a role in purifying the airflow. The rotating disk 70 has a function of preventing the airflow from entraining water droplets and escaping, and plays a role of air-liquid separation.

In the related art, a rotating cylinder and a rotating disk of air purification equipment are integrally driven, that is, the rotating cylinder and the rotating disk rotate at the same speed. The rotation speed of the rotating cylinder affects an effect of breaking down water and in turn affects the purification efficiency. The rotation speed of the rotating disc is related to the performance of capturing escaped water droplets and also affects the purification efficiency. In many situations, the optimal purification function cannot be achieved when the rotating disk and the rotating cylinder are rotating at the same speed. In order to achieve a stronger water break-down effect, when a higher speed of the rotating cylinder is required, if the speed of the rotating disk is also raised, pressure loss will be increased. In some situations where the performance requirement for the rotating disk to intercept water is high, but the requirement for the water break-down effect of the rotating cylinder is not high, energy consumption will be increased if the speed of the rotating cylinder is raised.

In addition, in order to solve the problem that the rotating cylinder and the rotating disk rotate at the same speed in the above embodiment, the rotating cylinder and the rotating disk in the related art are driven by two motors separately, that is, one motor drives the rotating cylinder and the other motor drives the rotating disk. Although the rotating cylinder and the rotating disk can rotate at different speeds, but the cost is increased and the energy efficiency is decreased.

However, the rotation speeds of the internal output shaft 20 and the external output shaft 30 of the differential apparatus 100 according to the embodiments of the present disclosure are different, so speeds of rotating components driven by the internal output shaft 20 and the external output shaft 30 correspondingly are also different. For example, the internal output shaft 20 is connected to the rotating cylinder 80 of the air purifying apparatus 1000, and the external output shaft 30 is connected to the rotating disk 70 of the air purifying apparatus 1000. In this way, the internal output shaft 20 drives the rotating cylinder 80 to rotate, the external output shaft 30 drives the rotating disk 70 to rotate, and the rotation speeds of the rotating cylinder 80 and the rotating disk 70 are different. For example, when a higher rotation speed of the rotating disk 70 is required, the rotating cylinder 80 can rotate at a low speed; when a higher rotation speed of the rotating cylinder 80 is required, the rotating disk 70 can rotate at a low speed. Thus, it is possible to prevent unnecessary energy consumption, achieve optimal purification performance, and reduce energy consumption. Moreover, only one motor 10 is required to drive the rotating disk and the rotating cylinder, which will not increase the cost and can improve the work energy efficiency.

To sum up, the rotating disk 70 and the rotating cylinder 80 have different requirements for the rotation speed. Only when the requirements of the rotating disk 70 and the rotating cylinder 80 are met, can the optimal performance of the whole machine (e.g., the air purifying apparatus 1000) be exerted. Therefore, the application of the differential apparatus 100 according to the embodiments of the present disclosure to the air purifying apparatus 1000 can improve the purification performance.

With the differential apparatus 100 according to the embodiments of the present disclosure, by connecting the external output shaft 30 to the internal output shaft 20 through the transmission member, the rotation speeds of the external output shaft 30 and the internal output shaft 20 are different, so that the differential rotation of the external output shaft 30 and the internal output shaft 20 can be realized, to drive the corresponding rotating components to rotate at different speeds, to improve the performance of the whole machine (e.g., the air purifying apparatus 1000) and reduce the energy consumption.

According to an embodiment of the present disclosure, the transmission member includes a gear set, and the gear set includes a first gear 41, a second gear 42, and a third gear 43. Specifically, the first gear 41 is fitted over the internal output shaft 20 and keeps synchronous rotation with the internal output shaft 20, and the second gear 42 meshes with the first gear 41 for transmission. As shown in FIG. 1, the second gear 42 is located on a left side of the first gear 41 and at the same axial height as the first gear 41. The first gear 41 and the internal output shaft 20 rotate at the same speed, and the first gear 41 meshes with the second gear 42 to drive the second gear 42 to rotate.

Further, the third gear 43 and the second gear 42 are coaxially arranged and rotate synchronously. It can be understood that a vertical shaft passes through the second gear 42 and the third gear 43, and the vertical shaft is arranged in parallel with the internal output shaft 20 (the vertical shaft is located on the a side of the internal output shaft 20, as shown in FIG. 1); the vertical shaft is fixedly connected to the second gear 42 and the third gear 43; the second gear 42 and the third gear 43 are spaced apart along an extension direction of the vertical shaft; the second gear 42 drives the vertical shaft to rotate and in turn drives the third gear 43 to rotate, so that the second gear 42 and the third gear 43 keep coaxial rotation at the same speed.

In addition, the external output shaft 30 is provided with a gear portion 31, and the third gear 43 meshes with the gear portion 31 on the external output shaft 30 for transmission. As shown in FIG. 1, the gear portion 31 is located right below the first gear 41 and meshes with the third gear 43, and the third gear 43 drives the gear portion 31 to rotate and in turn drives the external output shaft 30 to rotate. In conclusion, through the connection between the external output shaft 30 and the internal output shaft 20 by means of the gear set, under the drive of a single motor 10, the differential transmission of the internal output shaft 20 and the external output shaft 30 can be realized, avoiding that the internal output shaft 20 and the external output shaft 30 are always driven at the same speed. When the differential apparatus 100 is applied to the whole machine (e.g., the air purifying apparatus 1000), the energy consumption can be reduced and the optimal working performance can be achieved.

As shown in FIG. 1, according to an optional example of the present disclosure, the differential apparatus 100 includes a box body 50, and an accommodating cavity 50a is defined in the box body 50. The transmission member is located in the accommodating cavity 50a, and for example, the gear set is located in the accommodating cavity 50a. The box body 50 has a protective effect on the transmission member. The internal output shaft 20 penetrates the accommodating cavity 50a from top to bottom and extends downward. As shown in FIG. 1, an upper end of the internal output shaft 20 is connected to the motor shaft 11 of the motor 10, and a lower end of the internal output shaft 20 extends out of the box body 50 and extends downward to be connected to a corresponding rotating component.

According to another optional example of the present disclosure, the differential apparatus 100 includes a bearing assembly. The bearing assembly is arranged on the internal output shaft 20 and the external output shaft 30 and configured to support rotation of the internal output shaft 20 and the external output shaft 30, to reduce a friction coefficient during the movement of the internal output shaft 20 and the external output shaft 30, thereby improving the rotation precision.

According to another optional example of the present disclosure, the bearing assembly includes a first bearing 61 and a second bearing 62. A side of the gear portion 31 facing the motor 10 is provided with an accommodating groove, that is, a top end of the gear portion 31 is provided with the accommodating groove. The first bearing 61 is fitted over the internal output shaft 20, and the first bearing 61 is fitted in the accommodating groove, so that the rotation of the internal output shaft 20 can be supported, the friction coefficient during the rotation of the internal output shaft 20 can be reduced, and the rotation precision of the internal output shaft 20 can be improved.

In addition, a mounting groove is arranged on an inner bottom wall of the box body 50, the second bearing 62 is fitted in the mounting groove, and the second bearing 62 is fitted over the external output shaft 30 to support the rotation of the external output shaft 30, which can reduce the friction coefficient during the rotation of the external output shaft 30 and improve the rotation precision of the external output shaft 30.

As shown in FIG. 1, according to another optional example of the present disclosure, the differential apparatus 100 further includes a motor cover 63, a motor cavity is defined in the motor cover 63, and the motor 10 is located in the motor cavity. An end of the first gear 41 away from the gear portion 31 (i.e., an upper end of the first gear 41) extends into the motor cavity in an axial direction to increase a contact area among the first gear 41, the internal output shaft 20 and the motor shaft 11, to ensure that the internal output shaft 20 can drive the first gear 41 to rotate, thereby improving the reliability of connection between the first gear 41 and the internal output shaft 20.

Further, the first gear 41 includes a gear body 411 and a shaft sleeve 412. The shaft sleeve 412 is coaxially connected with the gear body 411. The shaft sleeve 412 and the gear body 411 are integrally formed. The gear body 411 is connected to the second gear 42 in a meshing manner. The shaft sleeve 412 extends into the motor cavity and is connected to the motor shaft 11. The shaft sleeve 412 and the motor shaft 11 rotate coaxially at the same speed. The shaft sleeve 412 is fitted over the motor shaft 11, and the motor shaft 11 can drive the shaft sleeve 412 and the gear body 411 to rotate, and in turn drive the second gear 42 by meshing transmission. In this way, the contact area among the first gear 41, the motor shaft 11 and the internal output shaft 20 can be enlarged.

Optionally, the differential apparatus 100 includes sealing rings connected between the external output shaft 30 and the box body 50 and connected between the first gear 41 and the box body 50, so that tight connection between the external output shaft 30 and the box body 50 and tight connection between the first gear 41 and the box body 50 can be realized, to improve the sealing performance in the box body 50, and avoid water leakage into the box body 50 through a gap between the external output shaft 30 and the box body 50 and a gap between the first gear 41 and the box body 50, thereby realizing systematic waterproofness, which can effectively ensure that the transmission members are not affected.

The air purifying apparatus 1000 according to embodiments of a second aspect of the present disclosure includes a housing, a rotating disk 70, a rotating cylinder 80, a water distributor, and the differential apparatus 100 according to the above embodiments. The housing has an air inlet and an air outlet, and defines a rotating cavity in communication with the air inlet and the air outlet. The rotating disk 70 is rotatably arranged in the rotating cavity, and the rotating cylinder 80 is rotatably arranged in the rotating cavity. The rotating cylinder 80 is arranged upstream of the rotating disk 70. The so-called upstream of the rotating disk 70 refers to a region below the rotating disk 70 in a direction of the airflow from bottom to top in FIG. 1, and the rotating cylinder 80 is located below the rotating disk 70 as shown in FIG. 1.

It can be understood that a water storage space is defined at the bottom of the rotating cavity, and the water distributor can guide water at the bottom of the rotating cavity to flow upward and distribute water toward an interior of the rotating cylinder 80 through an upper end of the water distributor. The air inlet is arranged in a side wall of the housing and located below the purification assembly. When the water distributor distributes water toward the interior of the rotating cylinder 80, the water sprayed into the rotating cylinder 80 is broken down into small droplets by the rotating cylinder 80 rotating at a high speed. Under the action of centrifugal force, the small droplets can capture impurity particles in the airflow when being thrown to an inner wall of the rotating cavity. Part of dust-carrying droplets are thrown onto the inner wall of the rotating cavity, and droplets in the airflow intercepted by the rotating disk 70 are also thrown to the inner wall of the rotating cavity. Water droplets accumulate on the inner wall of the rotating cavity and slide downward.

In addition, the differential apparatus 100 is arranged downstream of the rotating disk 70. The so-called downstream of the rotating disk 70 refers to a region above the rotating disk 70 in the direction of the airflow from bottom to top in FIG. 1. As shown in FIG. 1, the differential apparatus 100 is located above the rotating disk 70. Further, the internal output shaft 20 of the differential apparatus 100 is connected to one of the rotating disk 70 and the rotating cylinder 80, while the external output shaft 30 of the differential apparatus 100 is connected to the other of the rotating disk 70 and the rotating cylinder 80. For example, the internal output shaft 20 is connected to the rotating cylinder 80, and the external output shaft 30 is connected to the rotating disk 70, so that the rotating disk 70 and the rotating cylinder 80 can be controlled to rotate at different speeds, which can achieve the optimal purification performance and save energy, compared with the integrated driving and synchronous rotation of the rotating disk and the rotating cylinder.

It should be further explained that the rotating disk 70 includes a plurality of stages, and the rotating cylinder 80 is located on an upstream side of the multi-stage rotating disk 70. A separating cylinder 71 is arranged between every two adjacent stages of rotating disks 70 in the multi-stage rotating disk 70. As shown in the FIG. 1, the rotating disk 70 includes two stages, and the separating cylinder 71 is connected between the two stages of rotating disks 70. An outer peripheral wall of the separating cylinder 71 is a cylindrical surface, that is, the outer peripheral wall of the separating cylinder 71 is formed as a closed wall surface. An interior of the separating cylinder 71 is not in communication with an exterior of the separating cylinder 71. For example, the separating cylinder 71 may be formed as a structure that is airtight and watertight. The separating cylinder 71 is spaced apart from the side wall of the housing, so that air can pass through a space between the separating cylinder 71 and the housing.

Specifically, the separating cylinder 71 is located downstream of a first-stage rotating disk 70. The first-stage rotating disk 70, the separating cylinder 71, and a second-stage rotating disk 70 rotate synchronously. A separation space is defined between the separating cylinder 71 and the housing and can allow air to pass through. Therefore, the air purified by the first-stage rotating disk 70 can flow through the separation space. By the separating cylinder 71 rotating at a high speed, a centrifugal movement of the air flowing through the separation space can be enhanced, which can help to throw the water droplets entrained in the air to the inner wall surface of the housing, facilitate the air-liquid separation, and improve the purification effect.

For example, by connecting the internal output shaft 20 of the differential apparatus 100 with the rotating cylinder 80, and connecting the external output shaft 30 with the multi-stage rotating disk 70, the differential rotation of the internal output shaft 20 and the external output shaft 30 can enable the rotating cylinder 80 and the multi-stage rotating disk 70 to rotate at different speeds. Thus, the rotating cylinder 80 and the multi-stage rotating disk 70 can achieve a better coordination state, achieving the optimal purification performance of the air purifying apparatus 1000 and reducing power consumption.

In the description of this application, "a plurality of stages" means two or more stages.

For the air purifying apparatus 1000 according to the embodiments of the present disclosure, by connecting the external output shaft 30 to the internal output shaft 20 through the transmission member, the rotation speeds of the external output shaft 30 and the internal output shaft 20 are different, so that the differential rotation of the external output shaft 30 and the internal output shaft 20 can be realized, to drive the corresponding rotating components to rotate at different speeds. Thus, the air purifying apparatus 1000 can exert the optimal performance, and the purification efficiency of the air purifying apparatus 1000 can be improved. The frequency of regular replacement of the filter screen is very low, and there is even no need to replace the filter screen, which can bring about convenience for use, reduce the subsequent maintenance cost, and lower the production cost.

In some optional examples, the air purifying apparatus 1000 includes a first connector 81, and the internal output shaft 20 is fixedly connected to the rotating cylinder 80 by the first connector 81. In this way, the rotating cylinder 80 and the internal output shaft 20 can maintain synchronous rotation better. Specifically, the first connector 81 includes a first connecting block 811 and a first convex portion 812. The first connecting block 811 has a first through hole, and the internal output shaft 20 passes through the first through hole and extends downward beyond a lower surface of the first connecting block 811. The first convex portion 812 is arranged on a top of the first connecting block 811, so that the first convex portion 812 is filled between the internal output shaft 20 and the rotating cylinder 80 in a direction surrounding the internal output shaft 20, and contact areas between the first connector 81 and the internal output shaft 20 and between the first connector 81 and the rotating cylinder 80 can be enlarged, which can make the connection between the internal output shaft 20 and the rotating cylinder 80 reliable and hence always maintain the synchronous rotation between the internal output shaft 20 and the rotating cylinder 80.

In some optional examples, the air purifying apparatus 1000 includes a second connector, and the external output shaft 30 is fixedly connected to the rotating disk 70 by the second connector. In this way, the rotating disk 70 and the external output shaft 30 can rotate synchronously, that is, the rotating disk 70 and the external output shaft 30 maintain the same rotation speed.

Further, the second connector includes a second connecting block 711 and a second convex portion 712. The second connecting block 711 has a second through hole. A mating portion 32 is formed at a lower end of the external output shaft 30. A corresponding groove is arranged at a bottom of the second connecting block 711. The external output shaft 30 passes through the second through hole, and the mating portion 32 is fitted in the groove, so that the cooperation between the external output shaft 30 and the second connecting block 711 is reliable. The second convex portion 712 is arranged on a top of the second connecting block 711, so that the second convex portion 712 is filled between the external output shaft 30 and the rotating disk 70 in a direction surrounding the external output shaft 30, and the second convex portion 712 extends upward beyond an upper surface of the rotating disk 70, which can enlarge contact areas between the second connector and the external output shaft 30 and between the second connector and the rotating disk 70, make the connection between the external output shaft 30 and the rotating disk 70 reliable, and hence always maintain the synchronous rotation between the external output shaft 30 and the rotating disk 70.

Further, the air purifying apparatus 1000 further includes a third bearing 90 arranged on a side of the second connector away from the motor 10. As shown in FIG. 1, the third bearing 90 is arranged on a bottom end of the second connector, and the third bearing 90 is fitted over the internal output shaft 20 to support the rotation of the internal output shaft 20, further reducing the friction coefficient during the rotation of the internal output shaft 20, and improving the rotation precision of the internal output shaft 20.

The air purifier according to embodiments of a third aspect of the present disclosure includes the air purifying apparatus 1000 according to the above embodiments and a filter device.

Specifically, the filter device is located above the air purifying apparatus 1000 to further filter remaining particulate matters in the air.

For the air purifier according to the embodiments of the present disclosure, by connecting the external output shaft 30 to the internal output shaft 20 through the transmission member, the rotation speeds of the external output shaft 30 and the internal output shaft 20 are different, so that the differential rotation of the external output shaft 30 and the internal output shaft 20 can be realized, to drive the corresponding rotating components to rotate at different speeds. Thus, the air purifying apparatus 1000 can exert the optimal performance, and the purification efficiency of the air purifier can be improved.

In addition, compared with the purification equipment in the related art, since the air purifier in the embodiments of the present disclosure first purifies the air by water (the so-called water washing purification herein refers to a purification method in which the air purifier according to the embodiments of the present application captures and absorbs pollutants in the air through water droplets, and then implements air-liquid separation), and further purifies the water-washed air through a filter device (e.g., a filter screen), which can for example filter out the remaining particulate matters in the air. As a result, the purity of the air purification can be guaranteed, the frequency of regular replacement of the filter device can be decreased, and there is even no need to replace the filter screen but only replace water regularly, which can bring about convenience for use, reduce the subsequent replacement and maintenance costs, and have good user experience.

In the description of the present disclosure, it is to be understood that terms such as "central," "upper," "lower," "left," "right," "vertical," "horizontal," "top," "bottom," "inner," "outer," "axial," "radial," and "circumferential" should be construed to refer to the orientations or positions as then described or as shown in the drawings under discussion. These relative terms are for convenience and simplification of description and do not indicate or imply that the device or element referred to must have a particular orientation or be constructed and operated in a particular orientation. Thus, these terms shall not be construed to limit the present disclosure.

Other configurations and operations of the differential apparatus 100, the air purifying apparatus 1000 and the air purifier are known to those skilled in the art and will not be elaborated herein.

Reference throughout this specification to "an embodiment," "some embodiments," "an exemplary embodiment," "an example," "a specific example," or "some examples," means that a particular feature, structure, material, or characteristic described in connection with the embodiment or example is included in at least one embodiment or example of the present disclosure. Thus, the appearances of these phrases in various places throughout this specification are not necessarily referring to the same embodiment or example of the present disclosure. Furthermore, the particular features, structures, materials, or characteristics may be combined in any suitable manner in one or more embodiments or examples.

Although embodiments have been illustrated and described, it would be appreciated by those skilled in the art that changes, modifications, alternatives, and variations can be made in the embodiments without departing from principles and purposes of the present disclosure. The scope of the present disclosure is defined by claims and their equivalents.

## Claims

1. A differential apparatus, comprising:
a motor having a motor shaft;
an internal output shaft connected to the motor shaft of the motor, the internal output shaft and the motor shaft rotating coaxially at a same speed; and
an external output shaft connected to the internal output shaft through a transmission member to allow a rotation speed of the internal output shaft to be different from a rotation speed of the external output shaft, wherein the external output shaft has a central hole and is fitted over the internal output shaft.

2. The differential apparatus according to claim 1, wherein the transmission member comprises a gear set, and the gear set comprises:
a first gear fitted over the internal output shaft and configured to rotate synchronously with the internal output shaft;
a second gear configured to mesh with the first gear for transmission; and
a third gear arranged coaxially with the second gear and configured to rotate synchronously with the second gear, wherein the external output shaft is provided with a gear portion, and the third gear meshes with the gear portion on the external output shaft for transmission.

3. The differential apparatus according to claim 2, further comprising a box body defining an accommodating cavity, wherein the transmission member is located in the accommodating cavity, and the internal output shaft penetrates the accommodating cavity from top to bottom and extends downward.

4. The differential apparatus according to claim 3, further comprising a bearing assembly arranged on the internal output shaft and the external output shaft, and configured to support rotation of the internal output shaft and the external output shaft.

5. The differential apparatus according to claim 4, wherein the bearing assembly comprises:
a first bearing, wherein a side of the gear portion facing the motor is provided with an accommodating groove, and the first bearing is fitted over the internal output shaft and fitted in the accommodating groove to support the rotation of the internal output shaft; and
a second bearing, wherein a mounting groove is arranged in an inner bottom wall of the box body, the second bearing is fitted in the mounting groove, and the second bearing is fitted over the external output shaft to support the rotation of the external output shaft.

6. The differential apparatus according to claim 3, further comprising a motor cover defining a motor cavity, wherein the motor is located in the motor cavity, and an end of the first gear away from the gear portion extends into the motor cavity in an axial direction.

7. The differential apparatus according to claim 6, wherein the first gear comprises:
a gear body configured to mesh with the second gear; and
a shaft sleeve coaxially connected with the gear body, extending into the motor cavity, and configured to connect with the motor shaft and rotate coaxially with the motor shaft at a same speed.

8. The differential apparatus according to claim 6, comprising sealing rings connected between the external output shaft and the box body and between the first gear and the box body.

9. An air purifying apparatus, comprising:
a housing having an air inlet and an air outlet, and defining a rotating cavity in communication with the air inlet and the air outlet;
a rotating disk rotatably arranged in the rotating cavity;
a rotating cylinder rotatably arranged in the rotating cavity and located upstream of the rotating disk;
a water distributor configured to guide water at a bottom of the rotating cavity to flow upward and distribute the water toward an interior of the rotating cylinder; and
a differential apparatus according to any one of claims 1 to 8, wherein the differential apparatus is arranged downstream of the rotating disk; the internal output shaft of the differential apparatus is connected to one of the rotating disk and the rotating cylinder, and the external output shaft of the differential apparatus is connected to the other of the rotating disk and the rotating cylinder, to control the rotating disk and the rotating cylinder to rotate at different speeds.

10. The air purifying apparatus according to claim 9, comprising a first connector, wherein the internal output shaft is connected to the rotating cylinder through the first connector, and the first connector comprises:
a first connecting block having a first through hole, the internal output shaft passing through the first through hole and extending downward beyond a lower surface of the first connecting block; and
a first convex portion arranged on a top of the first connecting block and filled between the internal output shaft and the rotating cylinder in a direction surrounding the internal output shaft.

11. The air purifying apparatus according to claim 9, comprising a second connector, wherein the external output shaft is connected to the rotating disk through the second connector, and the second connector comprises:
a second connecting block having a second through hole and provided with a groove at a bottom of the second connecting block, wherein a mating portion is formed at a lower end of the external output shaft, the external output shaft passes through the second through hole, and the mating portion is fitted in the groove; and
a second convex portion arranged on a top of the second connecting block, filled between the external output shaft and the rotating disk in a direction surrounding the external output shaft, and extending upward beyond an upper surface of the rotating disk.

12. The air purifying apparatus according to claim 11, further comprising a third bearing arranged on a side of the second connector away from the motor, and fitted over the internal output shaft to support rotation of the internal output shaft.

13. An air purifier, comprising an air purifying apparatus according to any one of claims 9 to 12.
